# EUROPÄISCHE PATENTSCHRIFT

(11) **EP 3 726 192 B1**
(45) Veröffentlichungstag und Bekanntmachung des Hinweises auf die Patenterteilung: **27.07.2022**
(21) Anmeldenummer: 20165646.9
(22) Anmeldetag: 25.03.2020
(51) Int. Cl.: G01M 3/02

(54) **PRÜF- UND/ODER REINIGUNGSAPPARAT FÜR SCHLAUCHLEITUNGEN ODER SCHLAUCH-/ROHRSTÜCKE**
TEST AND / OR CLEANING APPARATUS FOR HOSE LINES OR HOSE/PIPE FITTINGS
APPAREIL DE VÉRIFICATION ET/OU DE NETTOYAGE POUR CONDUITES FLEXIBLES OU PIÈCES TUBULAIRES/FLEXIBLES

(30) Priorität: 29.03.2019 DE 102019108230
(43) Veröffentlichungstag der Anmeldung: 21.10.2020
(73) Patentinhaber: Uniflex-Hydraulik GmbH, 61184 Karben (DE)
(72) Erfinder: Döring, Hendrik, 61169 Friedberg (DE); BAUMGARTNER, Carsten, 35321 Laubach (DE)
(74) Vertreter: Grättinger Möhring von Poschinger Patentanwälte Partnerschaft mbB

(56) Entgegenhaltungen:
- US-A- 2 334 303
- US-A- 4 485 654
- US-A- 5 515 885

## Beschreibung

Die vorliegende Erfindung betrifft einen Prüf- und/oder Reinigungsapparat für Schlauchleitungen oder Schlauch-/Rohrstücke. Insbesondere betrifft sie, wie im Oberbegriff des Anspruchs 1 angegeben, einen Prüf- und/oder Reinigungsapparat für Schlauchleitungen oder Schlauch-/Rohrstücke, umfassend eine Basisstruktur, eine endseitig mit der Schlauchleitung bzw. mit dem Schlauch-/Rohrstück verbindbare Anschlusseinheit und ein mit dieser kommunizierendes, einen Vorratsbehälter und eine Pumpe aufweisendes Flüssigkeitssystem, wobei die Anschlusseinheit eine der mechanischen Fixierung eines Endes der Schlauchleitung bzw. des Schlauch-/Rohrstücks dienende Spanneinrichtung und einen zum dichten Zusammenwirken mit dem fixierten Ende der Schlauchleitung bzw. des Schlauch-/Rohrstücks geeigneten Dichtkopf umfasst, welcher einen eine fluidische Verbindung des Innenraums der Schlauchleitung bzw. des Schlauch-/Rohrstücks mit dem Flüssigkeitssystem herstellenden Medienkanal aufweist.

Nicht nur die Patentliteratur befasst sich mit Vorrichtungen zum Druckprüfen von Schlauchleitungen und Rohren (vgl. beispielsweise DE 3009168 C2, US 6997044 B1, DE 839103 A, US 1637956 A und US 3334515 A). Vielmehr sind gattungsgemäße Prüf- und/oder Reinigungsapparate für Schlauchleitungen oder Schlauch-/Rohrstücke auch aus der Praxis in verschiedenen Ausführungen bekannt. Sie gehören beispielsweise, dort als "Prüfstände"/"Reinigungsgeräte" bezeichnet, zum Produktprogramm der Fa. Uniflex Hydraulik GmbH, Karben. Diese Prüf- und/oder Reinigungsapparate dienen insbesondere der Druck-/Dichtigkeitsprüfung (sog. "Abdrücken") und/oder dem Reinigen von einbaufertigen, einen Schlauchabschnitt und zwei endseitig daran angebrachte Armaturen aufweisenden Schlauchleitungen beispielsweise für Hydraulikanwendungen. Gerade im Hinblick auf solche Anwendungen ist die Druck-/Dichtigkeitsprüfung der betreffenden Schlauchleitung eminent wichtig, nicht zuletzt wegen der Umweltschädlichkeit üblicher Hydrauliköle und aus Gründen der Sicherheit.

Die Druck-/Dichtigkeitsprüfung der betreffenden Schlauchleitung erfolgt dabei unter Verwendung einer Flüssigkeit (Prüfflüssigkeit), mit der die Schlauchleitung befüllt und die anschließend unter einen Prüfdruck gesetzt wird. Auch zum Reinigen der Schlauchleitung kommt Flüssigkeit (Reinigungsflüssigkeit) zum Einsatz, nämlich indem die Schlauchleitung mit dieser gespült wird. Prüf- und Reinigungsflüssigkeit können dabei identisch sein, was allerdings nicht zwingend ist. Im Anschluss an den Prüf- und/oder Reinigungsvorgang wird die betreffende Flüssigkeit typischerweise mittels Druckluft ausgeblasen.

Die US 4,485,654 A offenbart einen gattungsgemäßen Prüf- und/oder Reinigungsapparat, d. h. einen Prüf- und/oder Reinigungsapparat für Schlauchleitungen oder Schlauch-/Rohrstücke mit den im Oberbegriff des Anspruchs 1 angegeben Merkmalen. Bei dem Dichtkopf der diesem Dokument entnehmbaren Anschlusseinheit zweigen somit von einer zentralen Durchgangsbohrung zwei schräg nach außen gerichtete Medienkanäle ab.

Ein Druck-Prüfapparat für Rohrstücke ist auch aus der US 4,192,177 A bekannt. Hier wird das Rohrstück zwischen zwei konischen Spannköpfen eingespannt. Einer von diesen weist zusätzlich zu einem zentral angeordneten, der Zuführung von Prüfflüssigkeit in den Innenraum des Rohrstücks dienenden Medienkanal einen Entlüftungskanal auf, an welchem ein in das Rohrstück hinein ragendes, im oberen Scheitelbereich des Rohrstücks mündendes Entlüftungsröhrchen angeschlossen ist. Auch der gegenüberliegende zweite Spannkopf ist mit einer Entlüftungseinrichtung ausgestattet, wobei die beiden Entlüftungseinrichtungen auch für den Druckabbau in dem betreffenden Rohrstück nach dem Abschluss der Druckprüfung herangezogen werden können.

Die US 5,515,885 A offenbart einen bei der Prüfung von Schläuchen einsetzbaren Anschlusskopf. Die Zufuhr der Prüf- bzw. Reinigungsflüssigkeit zu dem zu prüfenden bzw. zu reinigenden Schlauch/Rohr erfolgt dabei über eine in dem Dichtkopf vorgesehene zentrale Bohrung, welche sich nahe dem Ende des Dichtkopfes in zwei schräg nach außen gerichtete Medienkanäle verzweigt.

Die US 2,334,303 A offenbart einen bei der Druckprüfung von Bohrgestängen einsetzbaren zylindrischen Dichtkopf, welcher dichtend in das zu prüfende Bohrgestänge einsteckbar und durch welchen hindurch dem Innenraum des Bohrgestänges Prüfflüssigkeit zuführbar ist. Hierzu ist der Dichtkopf von einer zentralen Durchgangsbohrung durchsetzt.

Die in weiter oben dargelegter Weise vollzogene Druck-/Dichtigkeitsprüfung und/oder Reinigung von Schlauchleitungen bzw. Schlauch-/Rohrstücken mit gattungsgemäßen Prüf- und/oder Reinigungsapparaten ist etabliert; und die hierfür existierenden bekannten Prüf- und/oder Reinigungsapparaten haben sich im Wesentlichen bewährt. Dessen ungeachtet ist die vorliegende Erfindung darauf gerichtet, die Technologie im Vergleich mit dem dargelegten Stand der Technik weiter zu verbessern, namentlich in sicherheitstechnischer Hinsicht.

Auf überraschend einfache Weise wird dieses Ziel durch die im Anspruch 1 angegebene Ausführung des Prüf- und/oder Reinigungsapparats erreicht. Demnach weist der Dichtkopf des erfindungsgemäßen Prüf- und/oder Reinigungsapparats einen zumindest im Wesentlichen zu der Achse des ersten Endes der Schlauchleitung bzw. des Schlauch-/Rohrstücks fluchtenden, als Durchgangsbohrung ausgeführten Zentralkanal auf, von dem mindestens ein Medienkanal mit einer mit einem Winkel zu der Achse des Endes der Schlauchleitung bzw. des Schlauch-/Rohrstücks, schräg gegen deren/dessen Innenwand gerichtet orientierten Mündungsrichtung abzweigt, wobei der Zentralkanal im Bereich der Abzweigung des mindestens einen Medienkanals eine Querschnittsverengung aufweist.

In Anwendung der Erfindung lassen sich gravierende Vorteile insbesondere sicherheitstechnischer aber auch wirtschaftlicher Art erzielen. Es konnte nämlich festgestellt werden, dass die erfindungsgemäße Ausführung des Dichtkopfes - namentlich im Falle der erfindungsgemäßen Ausführung einer zuströmseitig, d. h. befüllseitig genutzten Anschlusseinheit - ein vollständig oder zumindest im Wesentlichen vollständig blasenfreies Befüllen der Schlauchleitung bzw. des Schlauch-/Rohrstücks erheblich begünstigt.

In Umsetzung der Erfindung lassen sich nämlich in der Anschlusseinheit Venturi-Effekte generieren, die sich sowohl bei zuströmseitig verwendeter Anschlusseinheit als auch bei abströmseitig verwendeter Anschlusseinheit im Sinne der hier zu lösenden Aufgabenstellung sehr positiv auswirken. Denn beim Befüllen der Schlauchleitung bzw. des Schlauch-/Rohrstücks mit Flüssigkeit durch eine solchermaßen ausgeführte zuströmseitige Anschlusseinheit werden - infolge des Venturi-Effekts - in den Rand- und Eckzonen des Übergangs vom Dichtkopf zum betreffenden Ende der Schlauchleitung bzw. des Schlauch-/Rohrstücks verbleibende Restluftmengen durch den mindestens einen Medienkanal hindurch abgesaugt; und die so abgesaugte Luft wird mit der den Zentralkanal durchströmenden Flüssigkeit zentral in die Schlauchleitung bzw. das Schlauch-/Rohrstück eingebracht und gelangt mit diesem Flüssigkeitsstrom zum anderen, austrittsseitigen Ende der Schlauchleitung bzw. des Schlauch-/Rohrstücks. Eine dort vorgesehene, im vorstehenden Sinne ausgeführte Anschlusseinheit wirkt in vergleichbarer Weise; denn infolge des Venturi-Effekts werden in den Rand- und Eckzonen des Übergangs vom Dichtkopf dieser Anschlusseinheit zum betreffenden Ende der Schlauchleitung bzw. des Schlauch-/Rohrstücks verbleibende Restluftmengen durch den mindestens einen Medienkanal hindurch in den Zentralkanal hinein abgesaugt und über den diesen durchströmenden Flüssigkeitsstrom ausgetragen. So zeigt sich, dass im Rahmen der vorliegenden Erfindung ganz besonders bevorzugt zwei erfindungsgemäß ausgeführte Anschlusseinheiten vorgesehen sind.

Indem auf diese Weise, verglichen mit bekannten Prüfapparaten mit einem einen zentralen Medienkanal aufweisenden Dichtkopf, bei der Druckprüfung in dem Prüfvolumen weniger (komprimierte bzw. zu komprimierende) Luft eingeschlossen ist, ist in ihm entsprechend weniger Energie gespeichert. Bei einem Versagen der Schlauchleitung bzw. des Schlauch-/Rohrstücks (z. B. durch Platzen des Schlauchabschnitts oder dessen Ausreißen aus der Anschlussarmatur) wird folglich weniger Energie schlagartig freigesetzt. Bereits dies ist - in sicherheitstechnischer Hinsicht - ein großer Gewinn; und auch ist - in wirtschaftlicher Hinsicht - von Nutzen, dass im Falle des Versagens der Schlauchleitung die Gefahr einer Beschädigung der Prüfkammer signifikant geringer ist als bisher bekannt.

Weiterhin erweist sich in sicherheitstechnischer Hinsicht als positiv, dass die Druckprüfung zuverlässigere Ergebnisse liefert. Denn entsprechend der Reduzierung der in dem Prüfvolumen eingeschlossenen Luftmenge verringert sich ein Federverhalten der komprimierten Luft. Das System wird in dem Sinne steifer, dass eine definierte Undichtigkeit der Schlauchleitung zu einem deutlich stärkeren Druckabfall im Prüfvolumen führt. Dies lässt hinwiederum auch eine signifikante Verkürzung der Prüfdauer zu, was einen erheblichen wirtschaftlichen Vorteil darstellt. Ebenfalls im Sinne einer Verkürzung der Dauer des Prüfvorgangs wirkt sich aus, dass für den Aufbau des Prüfdrucks innerhalb des Prüfvolumens weniger Luft verdichtet werden muss. Die Reduzierung bzw. idealerweise der Wegfall einer unproduktiven Komprimierung von in dem Prüfvolumen eingeschlossener Luft senkt zudem den Energiebedarf, was seinerseits die Wirtschaftlichkeit steigert.

Unter Nutzung der vorliegenden Erfindung kann somit die Druckprüfung bei erhöhter Sicherheit wirtschaftlicher und weniger zeitaufwendig durchgeführt werden, als dies nach dem Stand der Technik möglich ist. Idealerweise lässt sich sogar die Anzahl der in einer Fertigungsstätte vorzuhaltenden Prüf- und/oder Reinigungsapparate reduzieren.

Auf das Ergebnis der Reinigung einer Schlauchleitung bzw. eines Schlauch-/Rohrstücks wirken sich das durch die erfindungsgemäße Ausführung des betreffenden Reinigungsapparats erzielbare optimale Befüllen der Schlauchleitung bzw. des Schlauch-/Rohrstücks mit Reinigungsflüssigkeit sowie die vorteilhaften Auswirkungen auf die sich beim Durchspülen der Schlauchleitung bzw. des Schlauch-/Rohrstücks mit Reinigungsflüssigkeit einstellenden Strömungsverhältnisse ebenfalls ausgesprochen günstig aus.

Auch die Ausführung einer abströmseitig, d. h. entleerungsseitig genutzten Anschlusseinheit im Sinne der vorliegenden Erfindung ist sowohl unter dem Gesichtspunkt gesteigerter Sicherheit als auch im Hinblick auf möglichst kurze Prüf- bzw. Reinigungszyklen besonders günstig. Denn nicht nur trägt auch dies zu der Verringerung eines eingeschlossenen Luftvolumens bei. Auch lässt sich auf diese Weise (beim Ausblasen der Prüf- bzw. Reinigungsflüssigkeit mittels Druckluft) ein verbessertes Entleerungsverhalten erzielen. Hierdurch lässt sich eine rückstandsfreie Entleerung der Schlauchleitung bzw. des Schlauch-/Rohrstücks in besonders kurzer Zeit realisieren.

Bevorzugt ist dabei der mittlere Strömungsquerschnitt des mindestens einen Medienkanals wesentlich kleiner als der mittlere Strömungsquerschnitt des Zentralkanals.

Um die dargelegten, durch die vorliegende Erfindung ermöglichten Sicherheits- und Effizienz-Vorteile in Kombination miteinander nutzen zu können, zeichnet sich eine erste bevorzugte Weiterbildung der Erfindung dadurch aus, dass eine weitere Anschlusseinheit vorgesehen ist, welche eine der mechanischen Fixierung des zweiten Endes der Schlauchleitung bzw. des Schlauch-/Rohrstücks dienende Spanneinrichtung und einen Dichtkopf mit einem eine fluidische Verbindung des Innenraums der Schlauchleitung bzw. des Schlauch-/Rohrstücks mit dem Befüllsystem herstellenden Medienkanal umfasst, wobei die Mündungsrichtung des Medienkanals mit einem Winkel zu der Achse des zweiten Endes der Schlauchleitung bzw. des Schlauch-/Rohrstücks, schräg gegen deren/dessen Innenwand gerichtet orientiert ist. Die Kombination aus Zuwachs an Sicherheit und zweifacher Zeitersparnis beim (zumindest weitestgehend) vollständigen Befüllen wie auch beim restlosen/rückstandsfreien Entleeren der Schlauchleitung bzw. des Schlauch-/Rohrstücks wirkt im höchsten Maße nutzbringend. In diesem Zusammenhang ist, zur Vermeidung von Fehlvorstellungen, vorsorglich darauf hinzuweisen, dass bei dieser Weiterbildung keineswegs der zuströmseitige Dichtkopf und der abströmseitige Dichtkopf identisch gestaltet sein müssen. Vielmehr sind im Rahmen der vorliegenden Erfindung durchaus funktionsspezifische unterschiedliche Optimierungen der beiden Dichtköpfe (einerseits im Hinblick auf das vollständige Befüllen des Prüfvolumens bzw. eine gute Spülwirkung im Reinigungsvolumen und andererseits im Hinblick auf eine rasche rückstandsfreie Entleerung) möglich.

Die anspruchsgemäße Definition der Orientierung des mindestens einen Medienkanals durch Bezugnahme auf die Achse des Endes der mit dem Prüf- bzw. Reinigungsapparat zu prüfenden bzw. zu reinigenden Schlauchleitung bzw. des zu prüfenden bzw. zu reinigenden Schlauch- bzw. Rohrstücks berücksichtigt, dass eben der entsprechenden Schlauchleitung bzw. dem Schlauch-/Rohrstück eine sich durch die konstruktive Ausführung der Anschlusseinheit ergebende bestimmungsgemäße, durch die Spanneinheit festgelegte Position zukommt. Im Allgemeinen wird die Achse des Endes der mit dem Prüf- bzw. Reinigungsapparat zu prüfenden bzw. zu reinigenden Schlauchleitung bzw. des zu prüfenden bzw. zu reinigenden Schlauch- bzw. Rohrstücks dabei zusammenfallen mit einer Achse des Dichtkopfes.

Die nachstehende weitergehende Erläuterung der vorliegenden Erfindung und bevorzugter Ausgestaltungen erfolgt anhand der mit dem ersten Ende der Schlauchleitung bzw. des Schlauch-/Rohrstücks zusammenwirkenden Anschlusseinheit. Die entsprechenden Ausführungen gelten, wie zur Vermeidung von Missverständnissen vorsorglich zu betonen ist, indessen in gleicher Weise auch für eine optional vorgesehene, erfindungsgemäß ausgeführte, mit dem zweiten Ende der Schlauchleitung bzw. des Schlauch-/Rohrstücks zusammenwirkende weitere Anschlusseinheit (s. o.).

In bevorzugter Ausgestaltung der Erfindung weist der Dichtkopf mindestens zwei Medienkanäle mit jeweils in einem Winkel zu der Achse des Endes der Schlauchleitung bzw. des Schlauch-/Rohrstücks, schräg gegen deren/dessen Innenwand gerichtet orientierter Mündungsrichtung auf. Zwei Medienkanäle sind dabei besonders bevorzugt einander diametral gegenüberliegend angeordnet. Drei oder mehr Medienkanäle sind besonders bevorzugt gleichmäßig um die - zu der Achse des Endes der Schlauchleitung bzw. des Schlauch-/Rohrstücks fluchtende - Achse des Dichtkopfes verteilt.

Gemäß einer abermals anderen bevorzugten Weiterbildung der Erfindung ist die Mündungsrichtung des mindestens einen Medienkanals windschief zu der Achse des ersten Endes der Schlauchleitung bzw. des Schlauch-/Rohrstücks, mit einer Komponente in Umfangsrichtung orientiert. So lässt sich eine die Reinigung unterstützende Drallströmung generieren. Ferner ist vorteilhaft, wenn der Dichtkopf auswechselbar an einer Dichtkopfaufnahme angeordnet ist. Dabei erweist sich als günstig, wenn der Dichtkopf und die Dichtkopfaufnahme korrespondierende, im Sinne einer geometrischen Lagesicherung zusammenwirkende Sicherungsmittel aufweisen.

Eine wiederum andere besonders bevorzugte Weiterbildung der Erfindung zeichnet sich dadurch aus, dass der Dichtkopf einen zusätzlichen Kanal aufweist, der insbesondere als ein - der Beimengung bzw. Zugabe eines Additivs bzw. Zuschlagmittels dienender - Additivkanal oder als ein - der Aufnahme einer Messsonde oder Abzweigung eines Messtromes dienender - Messkanal ausgestaltet sein kann.

Eine wiederum andere bevorzugte Weiterbildung der Erfindung zeichnet sich dadurch aus, dass die Spanneinrichtung als ohne Werkzeug betätigbare Schnellspanneinrichtung ausgeführt ist. Die Möglichkeit einer werkzeuglosen Betätigung der Spanneinrichtung wirkt sich im Sinne einer Verkürzung der Rüstzeit aus und trägt somit ihrerseits dazu bei, das eingangs dargelegte Ziel zu erreichen. In ganz besonderem Maße gilt dies, wenn der Dichtkopf relativ zur Spanneinrichtung verschiebbar ist und die Spanneinrichtung ein Widerlager bildet für eine auf den Dichtkopf wirkende Andrückeinheit.

Die vorliegende Erfindung lässt sich, wie der Vollständigkeit halber festzuhalten ist, im Zusammenhang mit unterschiedlich ausgeführten Dichtköpfen realisieren. Auf die konkrete Ausführung der zum Abdichten des Dichtkopfes gegenüber dem zugeordneten Ende der Schlauchleitung bzw. des Schlauch-/Rohrstücks kommt es nicht entscheidend an. Beispielsweise kann der Dichtkopf, in bevorzugter Ausgestaltung der Erfindung, einen in das zugeordnete Ende der Schlauchleitung bzw. des Schlauch-/Rohrstücks einführbaren, kegelförmigen oder zylindrischen Dichtvorsprung oder auch eine zur stirnseitigen Anlage an dem ersten Ende der Schlauchleitung bzw. des Schlauch-/Rohrstücks geeignete ebene Dichtfläche aufweisen.

Im Folgenden wird die vorliegende Erfindung anhand eines in der Zeichnung veranschaulichten bevorzugten Ausführungsbeispiels näher erläutert. Dabei zeigt
- Fig. 1: in einer perspektivischen Gesamtansicht einen zur Umsetzung der vorliegenden Erfindung geeigneten Prüf- und Reinigungsapparat,
- Fig. 2: in vergrößerter Ansicht den Ausschnitt A aus Fig. 1,
- Fig. 3: in vergrößerter Ansicht den Ausschnitt B aus Fig. 2,
- Fig. 4: im Axialschnitt ein nicht-erfindungsgemäßes Vergleichsbeispiel eines Dichtkopfes eines Prüf- und Reinigungsapparats mit dem angrenzenden Bereich einer zu prüfenden und zu reinigenden Schlauchleitung,
- Fig. 5: im Querschnitt eine (ebenfalls nicht-erfindungsgemäße) Abwandlung des Dichtkopfes nach Fig. 4 und
- Fig. 6: in einem zu Fig. 4 vergleichbaren Axialschnitt einen Dichtkopfes eines erfindungsgemäßen, einem bevorzugten Ausführungsbeispiel entsprechenden Prüf- und Reinigungsapparats.

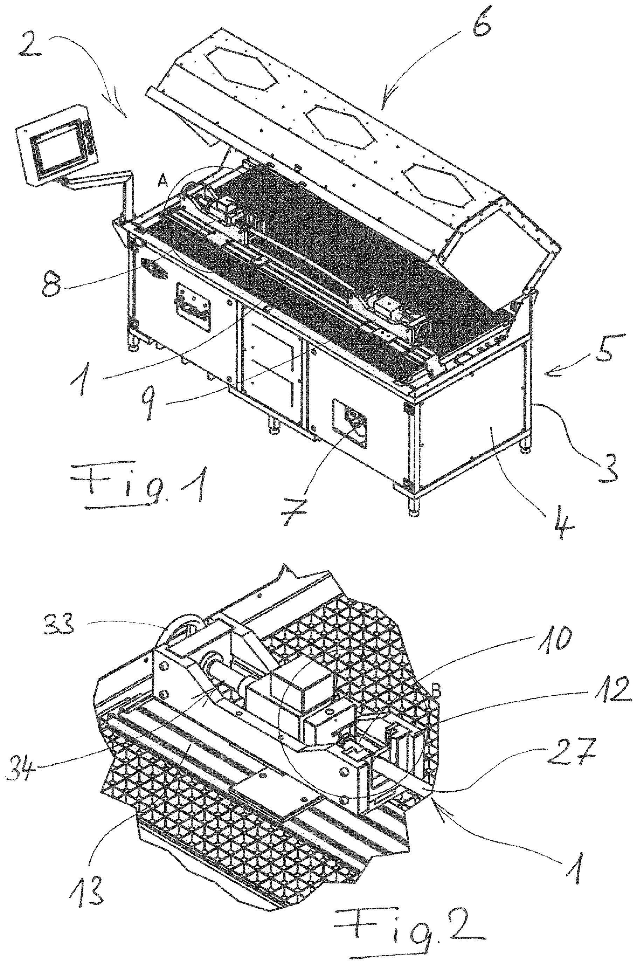

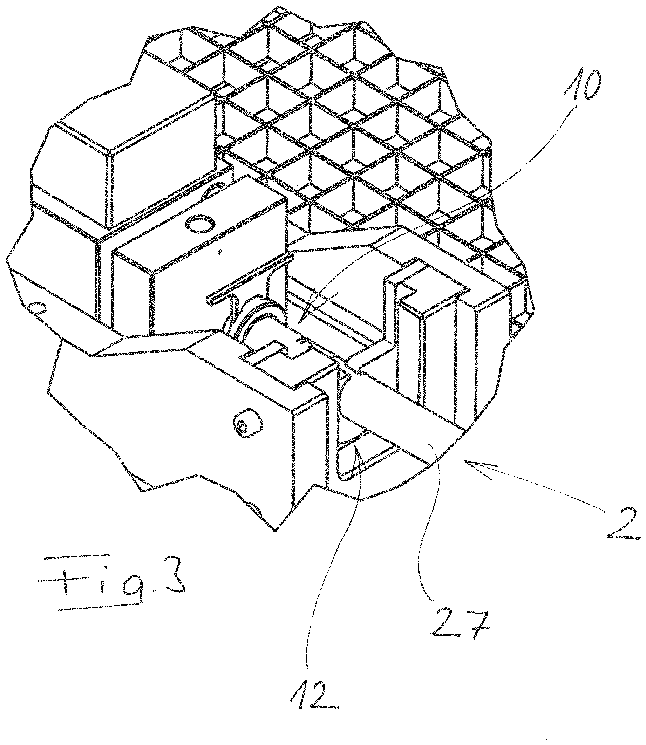

Der in den Figuren 1 bis 3 veranschaulichte, als kombinierter Prüf- und Reinigungsapparat für Schlauchleitungen 1 konzipierte Prüfstand 2 umfasst eine ein Gestell 3 und Verkleidungen 4 aufweisende Basisstruktur 5 und eine schwenkbar an dieser angebrachte Abdeckhaube 6. In dem Innenraum der Basisstruktur 5 ist ein (bis auf den Einfüllstutzen 7 nicht näher gezeigtes) Flüssigkeitssystem untergebracht, welches seinerseits insbesondere einen Vorratsbehälter für Prüf-/Reinigungsflüssigkeit und eine Pumpe aufweist. Weiterhin umfasst der Prüfstand eine erste Anschlusseinheit 8 und eine zweite Anschlusseinheit 9. Mit diesen sind die beiden Enden 10 der zu prüfenden bzw. zu reinigenden Schlauchleitung 1 mechanisch und fluidisch verbindbar. Jede der beiden Anschlusseinheiten 8, 9 weist dabei eine der mechanischen Fixierung des zugeordneten Endes 10 der Schlauchleitung 1 dienende Spanneinrichtung 12 auf. Die Spanneinrichtungen 12 sind jeweils ohne Werkzeug betätigbar und an unterschiedliche Schlauchleitungen 1 anpassbar. Die beiden - mit dem Fluidsystem kommunizierenden - Anschlusseinheiten 8, 9 sind im Übrigen verstellbar auf einer Trägerschiene 13 angeordnet, so dass sich ihr Abstand zueinander an die Länge der zu prüfenden bzw. zu reinigenden Schlauchleitung 1 anpassen lässt.

In dem vorstehend dargelegten Umfang entspricht der Prüfstand 2 nach den Figuren 1 bis 3 dem hinlänglich bekannten Stand der Technik. Auf weitergehende Erläuterungen wird aus diesem Grund - und auch angesichts dessen, dass es auf Details insoweit nicht ankommt - verzichtet.

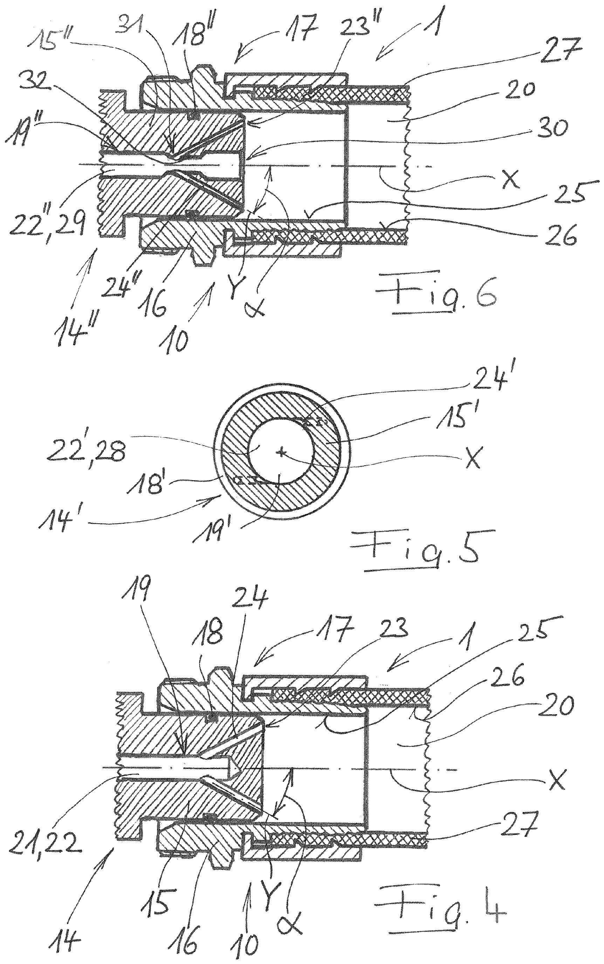

Weiterhin weisen die beiden Anschlusseinheiten 8, 9 jeweils, wie hier zunächst anhand des Vergleichsbeispiels nach Fig. 4 erläutert, einen zum dichten Zusammenwirken mit dem zugeordneten Ende 10 der Schlauchleitung 1 geeigneten Dichtkopf 14 auf. Dieser umfasst einen zylindrischen Dichtvorsprung 15, der in den Nippel 16 der jeweils zugeordneten Anschlussarmatur 17 einführbar und mittels eines O-Ringes 18 gegenüber diesem abdichtbar ist. Weiterhin weist der Dichtkopf 14 einen Mediendurchgang 19 auf, durch den hindurch der Innenraum 20 der Schlauchleitung 1 (Prüf- bzw. Reinigungsvolumen) fluidisch mit dem Flüssigkeitssystem verbindbar ist. Je nach der Einbaulage des betreffenden Dichtkopfes 14 bzw. dessen Integration in das Flüssigkeitssystem tritt durch den Mediendurchgang 19 hindurch Prüf- bzw. Reinigungsflüssigkeit in das Prüf- bzw. Reinigungsvolumen ein oder aus diesem aus.

Bei dem Vergleichsbeispiel nach Fig. 4 weist der Mediendurchgang 19 einen als Sackbohrung 21 ausgeführten Zentralkanal 22 und zwei von diesem abzweigende, ihrerseits jeweils eine Mündung 23 aufweisende Medienkanäle 24 auf. Der Zentralkanal 22 erstreckt sich dabei längs der Achse X der Anschlussarmatur 17 bzw. des Dichtvorsprungs 15. Bei jedem der beiden Medienkanäle 24 ist demgegenüber die Mündungsrichtung Y mit einem Winkel α zu der Achse X des Dichtvorsprungs 15, schräg gegen die Innenwand 25 des Nippels 16 der Anschlussarmatur 17 gerichtet orientiert. Bei einem entsprechend länger ausgeführten Dichtvorsprung 15 und/oder einer entsprechend kürzer ausgeführten Anschlussarmatur 17 ergibt sich eine schräg gegen die Innenwand 26 des Schlauchabschnitts 27 der Schlauchleitung 1 gerichtete Orientierung der Mündungsrichtung Y der Medienkanäle 24.

Bei dem in Fig. 5 - in einem im Bereich der Abzweigung der Medienkanäle 24' von dem Zentralkanal 22' mit Blickrichtung zum Schlauchabschnitt platzierten Querschnitt - veranschaulichten, gegenüber dem Vergleichsbeispiel nach Fig. 4 abgewandelten Dichtkopf 14' weist der Zentralkanal 22' einen signifikant größeren Durchmesser auf als bei der Ausführungsform nach Fig. 4. Er bildet auf diese Weise eine Art Zentralkammer 28 aus.

Dies erlaubt eine zu der Achse X des Dichtvorsprungs 15' effektiv windschiefe Orientierung der wiederum zwei Medienkanäle 24'. Diese divergieren somit nicht nur in Richtung zum Schlauchabschnitt hin. Vielmehr ist die Mündungsrichtung des jeweiligen Medienkanals 24' auch mit einer Komponente in Umfangsrichtung orientiert. Beim zuströmseitigen Einsatz dieses Dichtkopfes 14' bildet sich hierdurch in der Schlauchleitung eine ausgeprägte Drallströmung aus.

Der in Fig. 6 veranschaulichte Dichtkopf 14" unterscheidet sich von dem Vergleichsbeispiel nach Fig. 4 insbesondere dadurch, dass hier der Zentralkanal 22" nicht als Sackbohrung, sondern vielmehr als Durchgangsbohrung 29 ausgeführt ist. Auch der Zentralkanal 22" weist somit eine Mündung 30 auf. Wiederum zweigen zwei Medienkanäle 24" von dem Zentralkanal 22" ab. Für die Orientierung ihrer Mündungsrichtungen Y gelten die Erläuterungen zu Fig. 4 in entsprechender Weise. Der Zentralkanal 22" weist hier im Bereich der Abzweigung 31 der beiden Medienkanäle 24" eine Querschnittsverengung 32 auf. Beim Einsatz dieses Dichtkopfes 14" bildet sich hierdurch in den beiden Medienkanälen 24" jeweils eine von der Mündung 23" zum Zentralkanal 22" gerichtete Saugströmung aus.

Für die Vergleichsbeispiele nach den Figuren 4 und 5 sowie die Ausführungsform nach Fig. 6 gilt, dass jeweils der Dichtkopf 14, 14', 14" zweckmäßigerweise auswechselbar an einer Dichtkopfaufnahme angeordnet ist, so dass sich die jeweilige Anschlusseinheit 8, 9 - durch Austausch des Dichtkopfes 14, 14', 14" - einfach und mit geringem Aufwand an unterschiedliche Schlauchleitungen 1 adaptieren lässt. Der Dichtkopf 14, 14', 14" und die Dichtkopfaufnahme können dabei korrespondierende, im Sinne einer geometrischen Lagesicherung zusammenwirkende Sicherungsmittel (z. B. in Form eines in eine korrespondierende Aussparung eingreifenden Stifts) aufweisen. Im Übrigen ist jeweils - wie dies aus dem Stand der Technik bekannt ist und somit nicht näher erläutert wird - der Dichtkopf 14, 14', 14" (ggf. mit der zugeordneten Dichtkopfaufnahme; s. o.) relativ zu der zugeordneten Spanneinrichtung 12 verschiebbar. Hierzu dient eine über ein Handrad 33 betätigbare Vorschubeinrichtung 34. Insbesondere im Falle einer Abwandlung des beschriebenen Ausführungsbeispiels dahingehend, dass der Dichtvorsprung kegelförmig statt zylindrisch gestaltet ist oder aber der Dichtkopf eine zur stirnseitigen Anlage an dem zugeordneten Ende der Schlauchleitung 1 geeignete ebene Dichtfläche aufweist, bildet die Spanneinrichtung 12 zweckmäßigerweise ein Widerlager für eine auf den Dichtkopf wirkende, die erforderliche Dichtkraft bereitstellende Andrückeinheit.

Die Einsetzbarkeit der vorstehend erläuterten Prüfstand-Ausgestaltungen auch für das Prüfen bzw. die Reinigung von Schlauch- bzw. Rohrstücken ist evident. Eine Erläuterung erübrigt sich.

## Patentansprüche

1. Prüf- und/oder Reinigungsapparat für Schlauchleitungen (1) oder Schlauch-/Rohrstücke, umfassend eine Basisstruktur (5), eine endseitig mit der Schlauchleitung (1) bzw. mit dem Schlauch-/Rohrstück verbindbare Anschlusseinheit (8) und ein mit dieser kommunizierendes, einen Vorratsbehälter und eine Pumpe aufweisendes Flüssigkeitssystem, wobei die Anschlusseinheit (8) eine der mechanischen Fixierung eines Endes (10) der Schlauchleitung (1) bzw. des Schlauch-/Rohrstücks dienende Spanneinrichtung (12) und einen zum dichten Zusammenwirken mit dem fixierten Ende (10) der Schlauchleitung (1) bzw. des Schlauch-/Rohrstücks geeigneten Dichtkopf (14") umfasst, welcher einen zumindest im Wesentlichen zu der Achse (X) des ersten Endes (10) der Schlauchleitung (1) bzw. des Schlauch-/Rohrstücks fluchtenden, als Durchgangsbohrung (29) ausgeführten Zentralkanal (22") und mindestens einen von diesem abzweigenden, eine fluidische Verbindung des Innenraums (20) der Schlauchleitung (1) bzw. des Schlauch-/Rohrstücks mit dem Flüssigkeitssystem herstellenden Medienkanal (24") aufweist, dessen Mündungsrichtung (Y) mit einem Winkel (α) zu der Achse (X) des Endes (10) der Schlauchleitung (1) bzw. des Schlauch-/Rohrstücks, schräg gegen deren/dessen Innenwand (25, 26) gerichtet orientiert ist,
**dadurch gekennzeichnet,**
**dass** der Zentralkanal (22") im Bereich der Abzweigung (31) des mindestens einen Medienkanals (24") eine Querschnittsverengung (32) aufweist.

2. Prüf- und/oder Reinigungsapparat nach Anspruch 1, **dadurch gekennzeichnet, dass** der Dichtkopf (14") mindestens zwei Medienkanäle (24") mit jeweils in einem Winkel (α) zu der Achse (X) des ersten Endes (10) der Schlauchleitung (1) bzw. des Schlauch-/Rohrstücks, schräg gegen deren/dessen Innenwand (25, 26) gerichtet orientierter Mündungsrichtung (Y) aufweist.

3. Prüf- und/oder Reinigungsapparat nach Anspruch 1 oder Anspruch 2, **dadurch gekennzeichnet, dass** der mittlere Strömungsquerschnitt des mindestens einen Medienkanals (24") wesentlich kleiner ist als der mittlere Strömungsquerschnitt des Zentralkanals (22") .

4. Prüf- und/oder Reinigungsapparat nach einem der Ansprüche 1 bis 3, **dadurch gekennzeichnet, dass** die Spanneinrichtung (12) als ohne Werkzeug betätigbare Schnellspanneinrichtung ausgeführt ist.

5. Prüf- und/oder Reinigungsapparat nach einem der Ansprüche 1 bis 4, **dadurch gekennzeichnet, dass** der Dichtkopf (14") relativ zur Spanneinrichtung (12) verschiebbar ist.

6. Prüf- und/oder Reinigungsapparat nach Anspruch 5, **dadurch gekennzeichnet, dass** die Spanneinrichtung (12) ein Widerlager bildet für eine auf den Dichtkopf (14") wirkende Andrückeinheit.

7. Prüf- und/oder Reinigungsapparat nach einem der Ansprüche 1 bis 6, **dadurch gekennzeichnet, dass** der Dichtkopf (14") einen in das erste Ende (10) der Schlauchleitung (1) bzw. des Schlauch-/Rohrstücks einführbaren, kegelförmigen oder zylindrischen Dichtvorsprung (15") aufweist.

8. Prüf- und/oder Reinigungsapparat nach einem der Ansprüche 1 bis 6, **dadurch gekennzeichnet, dass** der Dichtkopf eine zur stirnseitigen Anlage an dem ersten Ende (10) der Schlauchleitung (1) bzw. des Schlauch-/Rohrstücks geeignete ebene Dichtfläche aufweist.

9. Prüf- und/oder Reinigungsapparat nach einem der Ansprüche 1 bis 8, **dadurch gekennzeichnet, dass** die Mündungsrichtung (Y) des Medienkanals windschief zu der Achse (X) des ersten Endes der Schlauchleitung bzw. des Schlauch-/Rohrstücks, mit einer Komponente in Umfangsrichtung orientiert ist.

10. Prüf- und/oder Reinigungsapparat nach einem der Ansprüche 1 bis 9, **dadurch gekennzeichnet, dass** der Dichtkopf (14") auswechselbar an einer Dichtkopfaufnahme angeordnet ist.

11. Prüf- und/oder Reinigungsapparat nach Anspruch 10, **dadurch gekennzeichnet, dass** der Dichtkopf (14") und die Dichtkopfaufnahme korrespondierende, im Sinne einer geometrischen Lagesicherung zusammenwirkende Sicherungsmittel aufweisen.

12. Prüf- und/oder Reinigungsapparat nach einem der Ansprüche 1 bis 11, **dadurch gekennzeichnet, dass** eine weitere Anschlusseinheit (9) vorgesehen ist, welche eine der mechanischen Fixierung des zweiten Endes (10) der Schlauchleitung (1) bzw. des Schlauch-/Rohrstücks dienende Spanneinrichtung (12) und einen Dichtkopf (14") mit einem eine fluidische Verbindung des Innenraums (20) der Schlauchleitung (1) bzw. des Schlauch-/Rohrstücks mit dem Flüssigkeitssystem herstellenden Medienkanal (24") umfasst, wobei die Mündungsrichtung (Y) des Medienkanals (24") mit einem Winkel (α) zu der Achse (X) des zweiten Endes (10) der Schlauchleitung (1) bzw. des Schlauch-/Rohrstücks, schräg gegen deren/dessen Innenwand (25, 26) gerichtet orientiert ist.

## Claims

1. Testing and/or cleaning apparatus for hose lines (1) or hose/pipe pieces, comprising a base structure (5), a connection unit (1) that can be connected to the hose/pipe piece (8) on the end side and a liquid system communicating with it, which comprises a storage tank and a pump, wherein the connection unit (8) comprises a clamping device serving to mechanically fix one end (10) of the hose line (1) or the hose/pipe piece (12) and a sealing head (14") suitable for tight interaction with the fixed end (10) of the hose line (1) or the hose/pipe piece, which comprises a central channel (22"), which is at least essentially aligned with the axis (X) of the first end (10) of the hose line (1) or the hose/pipe piece and is designed as a through-hole (29), and at least one media channel (24") branching off from this that establishes a fluidic connection between the interior space (20) of the hose line (1) or the hose/pipe piece and the liquid system, with the muzzle direction (Y) of the media channel (24") being orientated in a directed manner at an angle (α) to the axis (X) of the end (10) of the hose line (1) or the hose/pipe piece diagonally against the inner wall (25, 26) of the inner wall of the hose line (1) or the hose/pipe piece, **characterized in that** the central channel (22") in the area of the junction (31) of at least one media channel (24") comprises a cross-sectional narrowing (32).

2. Test and/or cleaning apparatus according to Claim 1, **characterized in that** the sealing head (14") comprises at least two media channels (24") each with their muzzle direction (Y) at an angle (α) to the axis (X) of the first end (10) of the hose line (1) or the hose/pipe piece orientated in a directed manner diagonally against the inner wall (25, 26) of the hose line (1) or the hose/pipe piece.

3. Test and/or cleaning apparatus according to Claim 1 or Claim 2, **characterized in that** the average flow cross-section of at least one media channel (24") is significantly smaller than the average flow cross-section of the central channel (22").

4. Testing and/or cleaning apparatus according to any one of the Claims 1 to 3, **characterized in that** the clamping device (12) is designed as a tool-operated quick clamping device.

5. Testing and/or cleaning apparatus according to any one of the Claims 1 to 4, **characterized in that** the sealing head (14") relative to the clamping device (12) is movable.

6. Test and/or cleaning apparatus according to Claim 5, **characterized in that** the clamping device (12) forms an abutment for a pressing unit acting on the sealing head (14") .

7. Testing and/or cleaning apparatus according to any one of the Claims 1 to 6, **characterized in that** the sealing head (14") comprises a conical or cylindrical sealing projection (15") that can be inserted into the first end (10) of the hose line (1) or the hose/pipe piece.

8. Testing and/or cleaning apparatus according to any one of the Claims 1 to 6, **characterized in that** the sealing head comprises a level sealing surface suitable for resting its face side on the first end (10) of the hose line (1) or the hose/pipe piece.

9. Test and/or cleaning apparatus according to any one of the Claims 1 to 8, **characterized in that** the muzzle direction (Y) of the media channel is orientated crookedly to the axis (X) of the first end of the hose line or the hose/pipe piece with a component in the circumferential direction.

10. Testing and/or cleaning apparatus according to any one of the Claims 1 to 9, **characterized in that** the sealing head (14") is arranged on a sealing-head holder in a manner allowing it to be replaced.

11. Testing and/or cleaning apparatus according to Claim 10, **characterized in that** the sealing head (14") and the sealing-head holder comprise interacting securing means that correspond in the sense of securing geometric position.

12. Testing and/or cleaning apparatus according to any one of the Claims 1 to 11, **characterized in that** a further connection unit (9) is provided which comprises a clamping device (12) serving to mechanically fix the second end (10) of the hose line (1) or the hose/pipe piece and a sealing head (14") with a media channel (24") that establishes a fluidic connection between the interior space (20) of the hose line (1) or the hose/pipe piece and the liquid system, wherein the muzzle direction (Y) of the media channel (24") is orientated in a directed manner at an angle (α) to the axis (X) of the second end (10) of the hose line (1) or the hose/pipe piece diagonally against the inner wall (25, 26) of the inner wall of the hose line (1) or the hose/pipe piece.

## Revendications

1. Appareil d'inspection et/ou de nettoyage de tuyaux flexibles (1) ou de parties de tuyau flexible/de tube, comprenant une structure de base (5), une unité de raccordement (8), susceptible d'être assemblée sur son extrémité avec le tuyau flexible (1) ou avec la partie de tuyau flexible/de tube et un système de liquide communiquant avec celle-ci, comportant un réservoir de stockage et une pompe, 1'unité de raccordement (8) comprenant un système de serrage (12), servant à la fixation mécanique d'une extrémité (10) du tuyau flexible (1) ou de la partie de tuyau flexible/de tube et une tête d'étanchéité (14"), apte à assurer la coopération étanche avec l'extrémité (10) fixée du tuyau flexible (1) ou de la partie de tuyau flexible/de tube, laquelle comporte une canalisation centrale (22") alignée au moins sensiblement sur l'axe (X) de la première extrémité (10) du tuyau flexible (1) ou de la partie de tuyau flexible/de tube, réalisée sous la forme d'un alésage traversant (29) et au moins une canalisation de fluide (24") dérivant de celle-ci, établissant une liaison fluidique de l'espace intérieur (20) du tuyau flexible (1) ou de la partie de tuyau flexible/de tube avec le système de liquide, dont la direction d'embouchure (Y) est orientée en étant dirigée sous un angle (a) par rapport à l'axe (X) de l'extrémité (10) du tuyau flexible (1) ou de la partie de tuyau flexible/de tube, en oblique par rapport à la paroi intérieure de celui-ci/de celle-ci (25, 26),
**caractérisé**
**en ce que** dans la zone de la dérivation (31) de l'au moins une canalisation de fluide (24"), la canalisation centrale (22") comporte un rétrécissement (32) de section transversale.

2. Appareil d'inspection et/ou de nettoyage selon la revendication 1, **caractérisé en ce que** la tête d'étanchéité (14") comporte au moins deux canalisations de fluide (24"), avec chacune une direction d'embouchure (Y) orientée en étant dirigée sous un angle (a) par rapport à l'axe (X) de la première extrémité (10) du tuyau flexible (1) ou de la partie de tuyau flexible/de tube, en oblique par rapport à la paroi intérieure de celui-ci/de celle-ci (25, 26).

3. Appareil d'inspection et/ou de nettoyage selon la revendication 1 ou la revendication 2, **caractérisé en ce que** la section transversale d'écoulement médiane de l'au moins une canalisation de fluide (24") est sensiblement inférieure à la section transversale d'écoulement médiane de la canalisation centrale (22") .

4. Appareil d'inspection et/ou de nettoyage selon l'une quelconque des revendications 1 à 3, **caractérisé en ce que** le système de serrage (12) est réalisé sous la forme d'un système de serrage rapide, actionnable sans le moindre outil.

5. Appareil d'inspection et/ou de nettoyage selon l'une quelconque des revendications 1 à 4, **caractérisé en ce que** la tête d'étanchéité (14") est déplaçable par rapport au système de serrage (12).

6. Appareil d'inspection et/ou de nettoyage selon la revendication 5, **caractérisé en ce que** le système de serrage (12) forme une butée pour une unité de pressage agissant sur la tête d'étanchéité (14").

7. Appareil d'inspection et/ou de nettoyage selon l'une quelconque des revendications 1 à 6, **caractérisé en ce que** la tête d'étanchéité (14") comporte une saillie d'étanchéité (15") cunéiforme ou cylindrique, insérable dans la première extrémité (10) du tuyau flexible (1) ou de la partie de tuyau flexible/de tube.

8. Appareil d'inspection et/ou de nettoyage selon l'une quelconque des revendications 1 à 6, **caractérisé en ce que** la tête d'étanchéité comporte une surface d'étanchéité plane, apte à s'appliquer par la face frontale sur la première extrémité (10) du tuyau flexible (1) ou de la partie de tuyau flexible/de tube.

9. Appareil d'inspection et/ou de nettoyage selon l'une quelconque des revendications 1 à 8, **caractérisé en ce que** par une composante, la direction d'embouchure (Y) de la canalisation de fluide est orientée en inclinaison dans la direction périphérique par rapport à l'axe (X) de la première extrémité du tuyau flexible ou de la partie de tuyau flexible/de tube.

10. Appareil d'inspection et/ou de nettoyage selon l'une quelconque des revendications 1 à 9, **caractérisé en ce que** la tête d'étanchéité (14") est placée de manière interchangeable sur un logement de tête d'étanchéité.

11. Appareil d'inspection et/ou de nettoyage selon la revendication 10, **caractérisé en ce que** la tête d'étanchéité (14") et le logement de tête d'étanchéité comportent des moyens de blocage correspondants, coopérant dans le sens d'un blocage de position géométrique.

12. Appareil d'inspection et/ou de nettoyage selon l'une quelconque des revendications 1 à 11, **caractérisé en ce qu'**il est prévu une unité de raccordement (9) supplémentaire, laquelle comprend un système de serrage (12) servant à la fixation mécanique de la deuxième extrémité (10) du tuyau flexible (1) ou de la partie de tuyau flexible/de tube et une tête d'étanchéité (14") avec une canalisation de fluide (24") établissant une liaison fluidique de l'espace intérieur (20) du tuyau flexible (1) ou de la partie de tuyau flexible/de tube avec le système de liquide, la direction d'embouchure (Y) de la canalisation de fluide (24") étant orientée en étant dirigée sous un angle (a) par rapport à l'axe (X) de la deuxième extrémité (10) du tuyau flexible (1) ou de la partie de tuyau flexible/de tube, en oblique par rapport à la paroi intérieure de celui-ci/de celle-ci (25, 26).
